# EUROPEAN PATENT APPLICATION

(11) **EP 1 542 297 A2**
(43) Date of publication of application: **15.06.2005**
(21) Application number: 04257008.5
(22) Date of filing: 11.11.2004
(51) Int. Cl.: H01M 4/02, H01M 4/40, H01M 10/28

(54) **Lithium cell and method for manufacturing the same**

(30) Priority: 25.11.2003 JP 2003393712
(71) Applicant: NGK SPARK PLUG CO., LTD., Nagoya-shi, Aichi-ken (JP)
(72) Inventor: Goto, Tomohisa, Iwakura, Aichi (JP); Matsumoto, Hiroshi, Fuso, Aichi (JP); Harada, Sadamitsu, Kakamigahara, Gihu (JP); Suzuka, Junichi, Inuyama, Aichi (JP)
(74) Representative: Brown, Kenneth Richard

(57) **Abstract**

In a lithium cell (1) using lithium foil or lithium alloy foil as an anode active substance (5), the main surface (7P) of an anodic current-collecting plate (7) in direct contact with the lithium foil or the lithium alloy foil is roughened by laser machining.

## Description

### BACKGROUND OF THE INVENTION

### Field of the Invention:

The present invention relates to a lithium cell and a method for manufacturing the lithium cell.

### Description of the Related Art:

Conventionally, thin-plate-like lithium cells have been used as memory backup power supplies for IC cards and various pieces of electronic equipment. Such a lithium cell uses lithium foil as an anode active substance, and a transition metal oxide, such as manganese dioxide, as a cathode active substance. The lithium foil and a composite material including manganese dioxide are separated from each other by a separator while being sandwiched between two metallic current-collecting plates.

In such a lithium cell, tightly-adherent contact between the lithium foil and the metallic current-collecting plate is desirable from the viewpoint of reduction in internal resistance of the cell. However, the lithium foil and the metallic current-collecting plate do not readily adhere to each other. Various attempts have been made to enhance adherent contact between them. For example, Japanese Patent Application Laid-Open (kokai) No. 5-277760 discloses the following technique for enhancing adherent contact: when a piece of lithium foil is placed in an anode can, the lithium foil is pressed against the bottom of the anode can while the anode can is rotated, to thereby enhance adherent contact therebetween. Japanese Patent No. 3046323 discloses a technique for enhancing adherent contact between lithium foil and a metallic current-collecting plate by means of microroughening the surface of the metallic current-collecting plate.

As lithium cells decrease in thickness, thin lithium foil is used. Application of a large force to the thin lithium foil could result in deformation or breakage of the thin lithium foil. Lithium foil and a metallic current-collecting plate joined by merely pressing the lithium foil against the metallic current-collecting plate with strong force cannot be expected to reliably maintain adherent contact for a long period of time. Introduction of special manufacturing equipment dedicated to the purpose of attaching the lithium foil to the metallic current-collecting plate is not a wise choice, from the viewpoint of manufacturing cost.

Even when the surface of a metallic current-collecting plate is roughened, adherence of lithium foil to the metallic current-collecting plate varies greatly depending on the form and size of resultant irregularities. Mismatch between material for the metallic current-collecting plate and a roughening method may fail to properly roughen the surface of the metallic current-collecting plate or may completely fail to roughen the surface.

### SUMMARY OF THE INVENTION

In view of the above-mentioned problems, a first object of the present invention is to provide a lithium cell having good adherent contact between lithium foil and a metallic current-collecting plate and exhibiting stable adherence over a long period of time.

A second object of the invention is to provide a method for manufacturing a lithium cell capable of enhancing adherent contact between the lithium foil and the metallic current-collecting plate.

To achieve the first object, the present invention provides a lithium cell comprising a first current-collecting plate made of metal and serving as an anode; a second current-collecting plate serving as a cathode and facing the first current-collecting plate; and lithium foil or lithium alloy foil serving as an anode active substance and disposed in direct contact with a main surface of the first current-collecting plate, wherein the main surface of the first current-collecting plate in direct contact with the lithium foil or the lithium alloy foil is roughened by laser machining.

The present invention also provides a lithium cell comprising a separator; an anode active substance and a cathode active substance separated from each other by the separator; a pair of frame sheet members bonded together, one frame sheet member surrounding the anode active substance on one side of the separator, and the other frame sheet member surrounding the cathode active substance on the other side of the separator; and first and second metallic current-collecting plates fixed to the corresponding frame sheet members, the first metallic current-collecting plate and the separator holding the anode active substance therebetween, and the second metallic current-collecting plate and the separator holding the cathode active substance therebetween. In the lithium cell, the anode active substance is lithium foil or lithium alloy foil; and craterlike spots each comprising a rim and a depression are formed on the first metallic current-collecting plate in a region in contact with the lithium foil or the lithium alloy foil. Preferably, the craterlike sports are formed by means of laser machining.

In the present invention, the surface of the metallic current-collecting plate serving as an anode is roughened. The resultant micro-irregularities bite into the soft lithium foil or lithium alloy foil to thereby yield an anchor effect, so that strong adherent contact therebetween can be maintained over a long period of time. Also, the contact area between the metallic current-collecting plate and the lithium foil or the lithium alloy foil increases, thereby lowering contact resistance.

To achieve the second object, the present invention provides a method for manufacturing a lithium cell having a platelike shape and using lithium foil or lithium alloy foil as an anode active substance. The method comprises the steps of roughening the main surface of a metallic current-collecting plate associated with an anode by irradiating the main surface with a laser beam; and forcing the lithium foil or the lithium alloy foil to closely adhere to the roughened main surface.

As compared with a process of surface roughening by electrodeposition of metal particles or by chemical etching, the method of the present invention can form micro-spots of highly uniform shape on the metallic current-collecting plate. Also, the method of the present invention is superior to a process of surface roughening by blasting, in that no contaminants remain. Contaminants remaining in the cell cause unnecessary chemical reaction, resulting in an adverse effect on characteristics, such as capacity, of the cell.

Preferably, in the method of the present invention, the metallic current-collecting plate is made of stainless steel; and a YVO₄ laser oscillator capable of performing single-mode oscillation is used as a source of the laser beam. The YVO₄ laser oscillator capable of performing single-mode oscillation is advantageous in that a laser beam can be of a very small diameter. As compared with a YAG laser or the like, the YVO₄ laser can produce steep pulses and thus high peak power. Therefore, the YVO₄ laser exhibits excellent performance in terms of highly accurate microroughening. Particularly, when the surface of stainless steel is to be roughened, a CO₂ laser and a YAG laser encounter difficulty in roughening the surface, and thus use of the YVO₄ laser is highly recommended.

Preferably, in the method of the present invention, laser beam irradiation conditions are adjusted in such a manner as to form craterlike laser-machined spots each comprising a rim and a depression on the main surface of the metallic current-collecting plate; and the laser beam is caused to scan the main surface so as to form the laser-machined spots in a regular arrangement. The structure of a laser-machined spot that a rim and a depression are formed yields a stronger anchor effect. Also, regular arrangement of such laser-machined spots generates a uniform adherent contact force over the entire surface of the lithium foil, thereby preventing variations in characteristics among lithium cell products.

### BRIEF DESCRIPTION OF THE DRAWINGS

FIG. 1 is a perspective view of a lithium cell according to an embodiment of the present invention;
FIG. 2 is a sectional view of the lithium cell taken along the line II - II of FIG. 1;
FIG. 3 is an enlarged sectional view showing the structure of a frame-like seal member of the lithium cell of FIG. 1;
FIG. 4 is a perspective view of a current-collecting plate whose surface is roughened according to a method of the present invention;
FIG. 5 is an enlarged schematic sectional view of a laser-machined spot;
FIG. 6 is a schematic graph showing the energy distribution of a laser beam;
FIG. 7 is a schematic perspective view showing laser machining;
FIG. 8 is a set of explanatory views showing the steps of manufacturing the lithium cell of FIG. 1;
FIGS. 9A and 9B are diagrams showing surface roughness profiles of a current-collecting plate as measured before and after a surface-roughening process; and
FIG. 10 is a series of photographs showing the results of a tear-off test on lithium foil.

### DESCRIPTION OF THE PREFERRED EMBODIMENT

An embodiment of the present invention will next be described in detail with reference to the drawings.

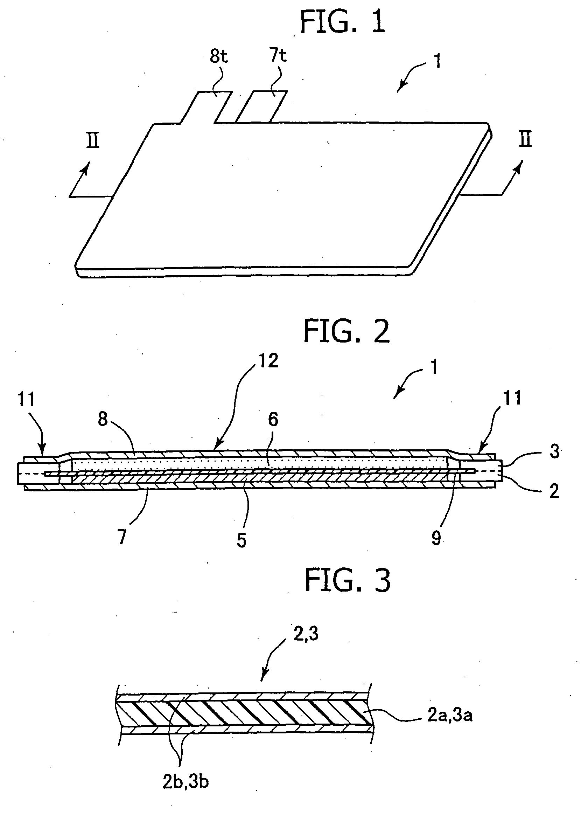

FIG. 1 is a perspective view of a lithium cell 1 according to the embodiment of the present invention, and FIG. 2 is a sectional view of the lithium cell 1 taken along the line II - II of FIG. 1. As shown in FIGS. 1 and 2, the lithium cell 1 has a rectangular platelike shape and includes a separator 9; an anode active substance 5 and a cathode active substance 6 separated from each other by the separator 9; a pair of window frames (frame sheet members) 2 and 3, which surround the anode active substance 5 and the cathode active substance 6, respectively, on the respective sides of the separator 9; a pair of current-collecting plates 7 and 8, the current-collecting plate 7 and the separator 9 holding the anode active substance 5 therebetween, and the current-collecting plate 8 and the separator 9 holding the cathode active substance 6 therebetween; and lead terminals (tabs) 7t and 8t formed integrally with the current-collecting plates 7 and 8, respectively. The lead terminals 7t and 8t serve as power output portions.

The current-collecting plates 7 and 8 also serve as facing materials of the lithium cell 1. The window frames 2 and 3 are bonded together and to the anodic and cathodic current-collecting plates 7 and 8, respectively, thereby forming a seal portion 11 for maintaining airtightness in the interior of the lithium cell 1. A peripheral portion of the separator 9 is held between the paired window frames 2 and 3. The paired window frames 2 and 3 hold the separator 9 between their internally peripheral portions and are bonded together at their externally peripheral portions. A portion of the lithium cell 1 that is surrounded by the seal portion 11 is a body portion 12 of the lithium cell 1. On a first side (anode side) of the lithium cell 1, the seal portion 11 and the body portion 12 are in substantially the same plane, whereas, on a second side (cathode side) of the lithium cell 1, the seal portion 11 and the body portion 12 constitute the form of a plateau. The thickness of the seal portion 11 is adjusted to be less than that of the body portion 12.

As shown in the enlarged sectional view of FIG. 3, the window frame 2 (3) is configured such that a hot-melt-type adhesive layer 2b (3b) is formed on opposite sides of a substrate 2a (3a). The substrate 2a (3a) is made of a thermoplastic resin, such as polyethylene (PE), polypropylene (PP), or polyethylene terephthalate (PET). The hot-melt-type adhesive layer 2b (3b) is made of ethylene-vinyl acetate (EVA), ethylene/methacrylate copolymer (EMAA), acid-modified polyethylene (PE-a), acid-modified polypropylene (PP-a), or the like. The present embodiment uses a 3-layered resin sheet to form the window frames 2 and 3. The 3-layered resin sheet is formed by sandwiching biaxially drawn polypropylene (OPP) between ethylene/methacrylate copolymers. In the case of a thin cell for use in an IC card conforming to ISO Standard (ISO/IEC 7810), the thickness of the window frames 2 and 3 is adjusted preferably to, for example, 90 µm to 150 µm. The window frame 2 is bonded to the current-collecting plate 7 and to the separator 9 via the respective adhesive layers 2b, and the window frame 3 is bonded to the current-collecting plate 8 and to the separator 9 via the respective adhesive layers 3b.

The anode active substance 5 can be lithium foil made of a lithium metal. The lithium metal means lithium or a lithium alloy. In the case of a lithium cell for use in an IC card conforming to ISO Standard, the thickness of the lithium foil is, for example, 50 µm to 150 µm. The cathode active substance (cathode composite material) 6 can be a substance that contains, for example, a manganese dioxide powder in an amount of 60% by mass to 70% by mass, carbon in an amount of 1% by mass to 5% by mass, and an electrolyte in an amount of 25% by mass to 35% by mass.

The electrolyte can be prepared by dissolving a lithium salt, such as lithium perchlorate (LiClO₄) or lithium triflate (LiCF₃SO₃), in an organic solvent, such as dimethoxyethane (DME), ethylene carbonate (EC), or propylene carbonate (PC). The separator 9 is a thin film-like member adapted to separate the cathode and the anode from each other and through which the electrolyte permeates sufficiently. Specifically, the separator 9 is a porous multilayered sheet made of resin, such as polyethylene or polypropylene. In the case of a lithium cell for use in an IC card conforming to ISO Standard, the thickness of the separator 9 is preferably, for example, 20 µm to 60 µm.

The current-collecting plates 7 and 8 and the lead terminals 7t and 8t can be made of a metal of good conductance selected from the group consisting of copper, copper alloys, stainless steel, aluminum, nickel, and nickel alloys. Particularly, stainless steel is preferred because of excellence in machinability, corrosion resistance, and economical efficiency. When the lithium cell 1 is used as a backup power supply, a component material of the current-collecting plate must not be eluted into the interior of the lithium cell 1. Stainless steel has the advantage in this point. Recommended stainless steels are SUS301, SUS304, SUS316, and SUS316L, which are typical austenitic stainless steels, as well as SUS631, which is a typical precipitation hardening stainless steel and has superb spring qualities.

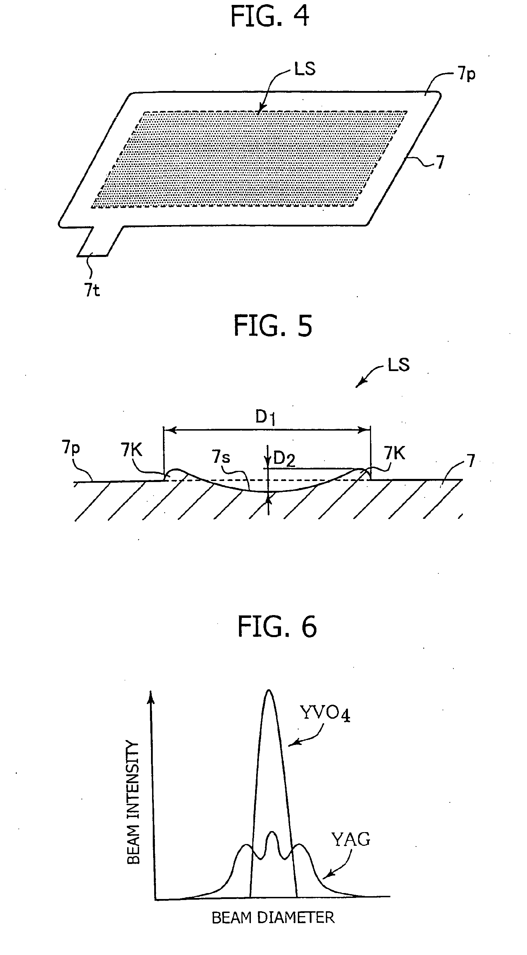

The anodic current-collecting plate 7 has a main surface 7p microroughened by laser machining. The main surface 7p comes into contact with the lithium foil that serves as the anode active substance 5. The microroughened main surface 7p enhances adherent contact between the anodic current-collecting plate 7 and the lithium foil. As shown in the perspective view of FIG. 4, laser-machined spots LS are formed on the entire central region of the main surface 7p of the anodic current-collecting plate 7. The laser-machined spots LS each assume a circular form and are arranged in such a regular manner as not to overlap each other.

As shown in the enlarged schematic sectional view of FIG. 5, the laser-machined spot LS has a crater shape (the form of a rimmed depression). Specifically, the laser-machined spot LS is composed of an annular rim 7K and a depression 7s. Diameter D₁ of the laser-machined spot LS is adjusted desirably to, for example, 20 µm to 100 µm. When the diameter D₁ of the laser-machined spot LS is too large, the effect of enhancing an adherent contact force may not be sufficiently yielded. When the diameter D₁ is too small, laser-machining cost increases. The diameter D₁ of the laser-machined spot LS is adjusted desirably to 40 µm to 100 µm.

Differential height D₂ between the rim 7K and the depression 7s (= maximum height Ry) is adjusted desirably to, for example, 0.5 µm to 5 µm. When the differential height D₂ is too small, the effect of enhancing an adherent contact force may not be sufficiently yielded. When the differential height D₂ is too large, laser-machining cost increases. A region in which the laser-machined spots LS are formed is desirably the entire region surrounded by the window frame 2. This allows an anchor effect induced by surface roughening to be established over the entire surface of the lithium foil. The differential height D₂ between the rim 7K and the depression 7s is adjusted more desirably to 1 µm to 5 µm.

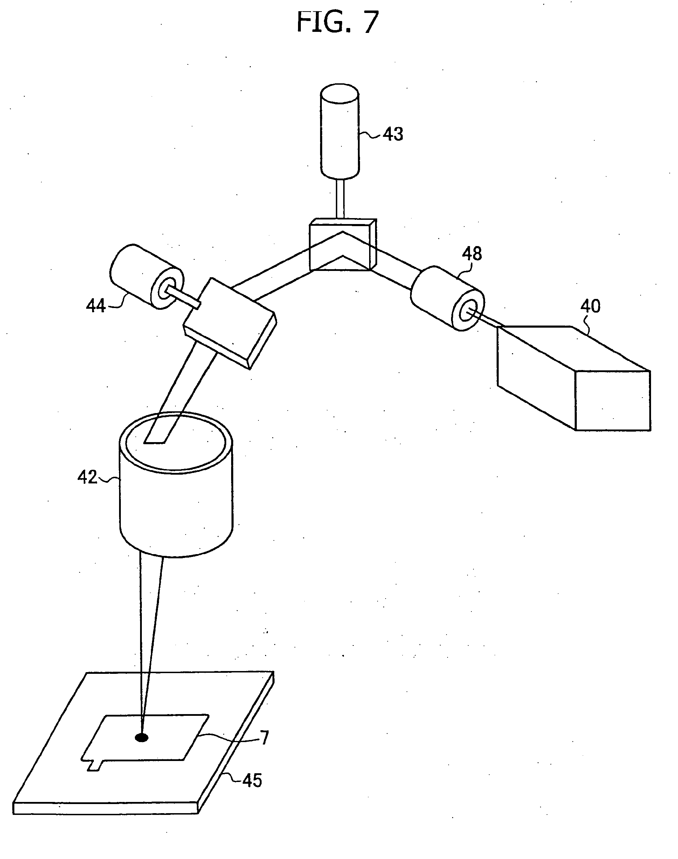

FIG. 7 schematically shows how a surface-roughening process is performed by means of laser beam irradiation. A laser beam is pulse-oscillated from a laser oscillator 40, passes through an unillustrated optical path switch and a mask 48, is led to an fθ lens 42 by means of galvanoscanners 43 and 44, and is applied to the metallic current-collecting plate 7 placed on an XY stage 45. Laser beam irradiation may be repeatedly applied to the same position a plurality of times; in other words, pulse beam shot may be repeated for the same position. This facilitates formation of the laser-machined spot LS having a sufficient differential height. Laser-machining conditions, such as the spot diameter of a laser beam, energy, and the number of shots, are adjusted so as to form the laser-machined spot LS as described previously with reference to FIG. 5.

The galvanoscanners 43 and 44 are controlled so as to form the laser-machined spots LS in a regular arrangement. This allows the surface of the metallic current-collecting plate 7 to be roughened uniformly, thereby preventing nonuniform distribution of an adherent contact force. The laser-machined spots LS can be arranged in any pattern; for example, tetragonal lattice, staggered lattice, or honeycomb. A laser beam can scan the surface by means of either raster scanning or vector scanning.

The above-mentioned surface roughening process can employ any gas laser, such as a CO₂ laser, an Ar laser, or an excimer laser, or any solid laser, such as a YAG laser, a YLF laser, or a YVO₄ laser. Particularly, the YVO₄ laser is preferred. Since the YVO₄ laser can perform single-mode oscillation, the YVO₄ laser is advantageous in terms of reduction in beam diameter. As shown in FIG. 6, while the YAG laser, which performs multi-mode oscillation, has relatively broad energy distribution, the YVO₄ laser has very steep energy distribution and can readily generate high peak power. Thus, the YVO₄ laser is suited for machining the surface of metal.

A commercially available laser marker can also be used. "Laser marking" is a process of forming letters, symbols, figures or the like on the surface of a subject material by means of evaporating, harming, or thermally or chemically modifying portions of the surface of the subject material by use of a laser beam, or a process of forming, for example, letters on a thin subject material by means of forming holes through the thin subject material by use of a laser beam.

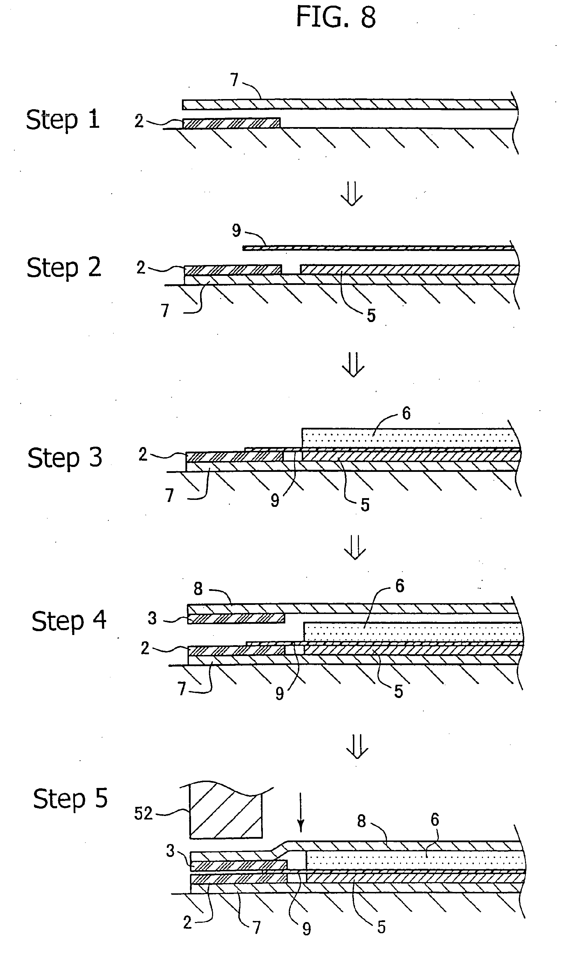

Next, a process of manufacturing the lithium cell 1 will be described with reference to FIG. 8. First, the surface of the metallic current-collecting plate 7 for the anode is roughened by the previously described method. Next, the current-collecting plate 7 is brought into surface-to-surface contact with the window frame 2, and then the adhesive layer of the window frame 2 is melted so as to bond the current-collecting plate 7 to the window frame 2, by a ultrasonic welding process or a thermal welding process (Step 1). Next, an assembly of the window frame 2 and the current-collecting plate 7 is turned over, and then the lithium foil 5, which serves as an anode active substance, is placed on the assembly. Furthermore, the separator 9 is placed on the assembly in such a manner as to cover the lithium foil 5 and such that a peripheral portion of the separator 9 comes into surface-to-surface contact with the window frame 2 (Step 2). In order to avoid dislocation of the separator 9, the separator 9 and the window frame 2 are preferably thermally welded together.

Next, a composite material prepared by mixing MnO₂, an electric-conduction aid, and an electrolyte is printed, as the cathode active substance 6, on the main surface of the separator 9 by a thick-film printing method using a metal mask (Step 3). The cathodic current-collecting plate 8 to which the window frame 3 is bonded beforehand is placed on the assembly in such a manner as to cover the cathode active substance 6 (Step 4). Finally, under a vacuum or while the air is being evacuated from the space between the window frames 2 and 3, an ultrasonic horn 52 is brought into contact with the current-collecting plate 8 so as to weld the window frames 2 and 3 together, thereby yielding the lithium cell 1 (Step 5)).

Notably, the surface of the cathodic current-collecting plate 8 may also be roughened. However, when demand for enhancement of adherent contact is not very urgent with respect to the cathodic current-collecting plate 8, only the anodic current-collecting plate 7 may be subjected to surface roughening. Roughening the surface of the cathodic current-collecting plate 8 yields the effect of lowering contact resistance as a result of increase in contact area.

### EXAMPLES

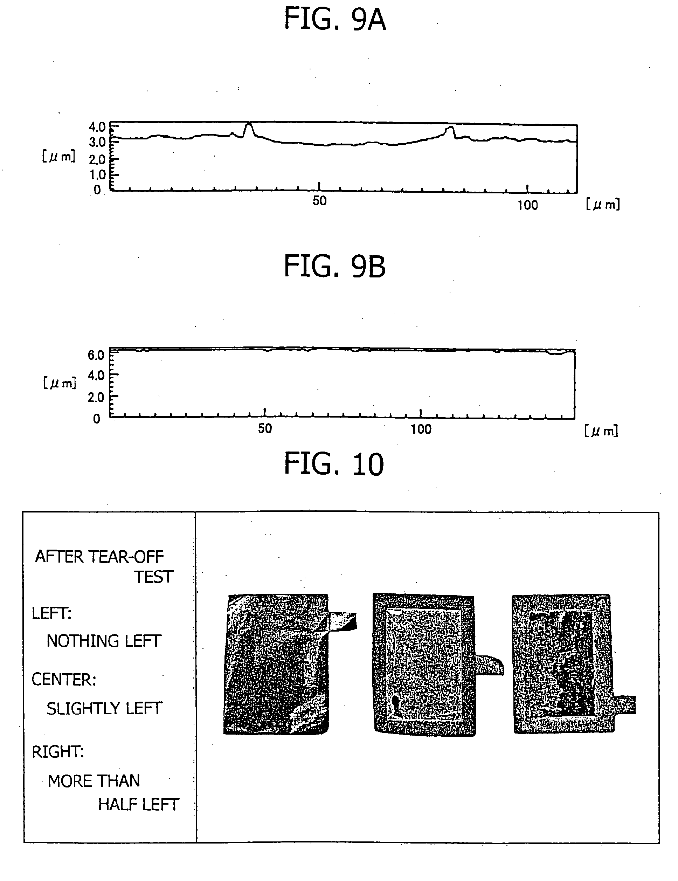

In order to confirm the effect of the present invention, the following experiments were conducted. First, a stainless steel plate (SUS304) having a thickness of 30 µm was prepared as an anodic current-collecting plate. The surface roughness of the stainless steel plate was measured. Subsequently, the surface of the stainless steel plate was roughened by use of a YVO₄ laser marker (MD-V9600, product of Keyence Corp.) under the following conditions: printing speed 4,000 mm/sec; frequency 20 KHz; laser output 3 W. The roughened surface was measured for roughness. FIGS. 9A and 9B shows measured surface roughness profiles.

FIG. 9A shows the surface roughness profile of the surface-roughened stainless steel plate as measured in a diametral direction of a laser-machined spot. The horizontal axis represents length in a planar direction, and the vertical axis represents length in the direction of thickness. From the profile of FIG. 9A, arithmetical mean roughness Ra = 0.192 µm, and maximum height Ry = 1.350 µm (JIC B0601 - 1994). FIG. 9B shows the surface roughness profile of the stainless steel plate as measured before the surface-roughening process was performed. The horizontal and vertical axes of FIG. 9B represent the same dimensional quantities as those of FIG. 9A. From the profile of FIG. 9B, arithmetical mean roughness Ra = 0.039 µm, and maximum height Ry = 0.310 µm.

Subsequently, lithium foil having a thickness of 55 µm was press-bonded to the roughened surface of the stainless steel by use of a press jig. Next, adhesive tape was affixed to the press-bonded lithium foil. Then, the adhesive tape was torn off in order to attempt to tear off the lithium foil. For comparison, the same tear-off test was conducted on a stainless steel plate whose surface was not roughened and on a stainless steel plate whose surface was roughened by means of chemical etching with a hydrochloric-acid-based chemical. The photographs of FIG. 10 show the test results.

The photographs of FIG. 10 show the test results with respect to the stainless steel plate whose surface was not roughened (left), the stainless steel plate whose surface was roughened by chemical etching (center), and the stainless steel plate whose surface was roughened by means of a laser beam (right). As is apparent from FIG. 10, superb adherent contact can be readily attained between the lithium foil and the current-collecting plate by the surface-roughening process that employs a laser beam.

## Claims

1. A lithium cell comprising a first current-collecting plate made (7) of metal and serving as an anode, a second current-collecting plate (8) serving as a cathode and facing the first current-collecting plate (7), lithium foil or lithium alloy foil serving as an anode active substance (5) and disposed in direct contact with a main surface (7p) of the first current-collecting plate (7), **characterized in that** the main surface (7p) of the first current-collecting plate (7) in direct contact with the lithium foil or the lithium alloy foil is roughened by laser machining.

2. A lithium cell **characterized by** comprising:
a separator (9);
an anode active substance (5) and a cathode active substance (6) separated from each other by the separator (9);
a pair of frame sheet members (2, 3) bonded together, one frame sheet member (2) surrounding the anode active substance (5) on one side of the separator (9), and the other frame sheet member (3) surrounding the cathode active substance (6) on the other side of the separator (9); and
first and second metallic current-collecting plates (7, 8) fixed to the corresponding frame sheet members, the first metallic current-collecting plate (7) and the separator (9) holding the anode active substance (5) therebetween, and the second metallic current-collecting plate (8) and the separator (9) holding the cathode active substance (6) therebetween;
wherein the anode active substance (5) is lithium foil or lithium alloy foil; and craterlike spots (LS) each comprising a rim (7K) and a depression (7s) are formed on the first metallic current-collecting plate (7) in a region in contact with the lithium foil or the lithium alloy foil.

3. A lithium cell comprising a first current-collecting plate made (7) of metal and serving as an anode, a second current-collecting plate (8) serving as a cathode and facing the first current-collecting plate (7), lithium foil or lithium alloy foil serving as an anode active substance (5) and disposed in direct contact with a main surface (7p) of the first current-collecting plate (7), **characterized in that** craterlike spots (LS) each comprising a rim (7K) and a depression (7s) are formed on the first metallic current-collecting plate (7) in a region in contact with the lithium foil or the lithium alloy foil.

4. A lithium cell according to claim 2 or claim 3, wherein the craterlike spots (LS) are formed by means of laser machining.

5. A lithium cell according to any of claims 2 to 4, wherein the craterlike spots (LS) are arranged regularly.

6. A lithium cell according to any of claims 2 to 5, wherein the craterlike spots (LS) each have a diameter of 20 µm to 100 µm.

7. A lithium cell according to any of claims 2 to 6, wherein the craterlike spots (LS) are formed in such a manner that a differential height between the rim (7K) and the depression (7s) is 0.5 µm to 5 µm.

8. A lithium cell according to any preceding claim, wherein the lithium foil or lithium alloy foil has a thickness of 50 µm to 150 µm.

9. A lithium cell according to any preceding claim, wherein the first metallic current-collecting plate (7) is made of stainless steel.

10. A method for manufacturing a lithium cell using lithium foil or lithium alloy foil as an anode active substance (5), comprising the steps of:
roughening a main surface (7p) of a metallic current-collecting plate (7) for an anode by irradiating the main surface (7p) with a laser beam; and
forcing the lithium foil or the lithium alloy foil to closely adhere to the roughened main surface (7p).

11. A method for manufacturing a lithium cell according to claim 10, wherein the metallic current-collecting plate (7) is made of stainless steel; and a YVO₄ laser oscillator (40) capable of performing single-mode oscillation is used as a source of the laser beam.

12. A method for manufacturing a lithium cell according to claim 10 or 11, wherein laser beam irradiation conditions are adjusted in such a manner as to form craterlike laser-machined spots (LS) each comprising a rim (7K) and a depression (7s) on the main surface (7p) of the metallic current-collecting plate (7); and the laser beam is caused to scan the main surface (7p) so as to form the laser-machined spots (LS) in a regular arrangement.
